# EUROPÄISCHE PATENTANMELDUNG

(11) **EP 1 294 184 A1**
(43) Veröffentlichungstag der Anmeldung: **19.03.2003**
(21) Anmeldenummer: 01121893.0
(22) Anmeldetag: 12.09.2001
(51) Int. Cl.: H04N 5/235

(54) **Verschlussteuerung für Luftbild-Digitalkamera**

(71) Anmelder: Teuchert, Wolf D., Dr., 89551 Königsbronn (DE)
(72) Erfinder: Teuchert, Wolf D., Dr., 89551 Königsbronn (DE)
(74) Vertreter: KOHLER SCHMID + PARTNER

(57) **Zusammenfassung**

Bei einem Verfahren zur Luftbildaufnahme eines überflogenen Oberflächenbereichs (16) mittels eines auftreffendes Licht aufintegrierenden elektronischen Detektors (5), der während eines Öffnungszeitraums eines elektronisch angesteuerten mechanischen Zentralverschlusses (9) ein Bild elektronisch aufnimmt, wird erfindungsgemäß zu einem vorbestimmten Zeitpunkt vor dem Ende des Schließvorgangs des Zentralverschlusses (9) die im Detektor (5) bis dahin aufintegrierte Bildinformation elektronisch gelöscht und nur die anschließend bis zum Ende des Schließvorgangs aufgenommene Bildinformation im Detektor (5) aufintegriert, wobei die Belichtungsdauer des Detektors (5) ab dem vorbestimmten Zeitpunkt bis zum Ende des Schließvorgangs kleiner als der kürzestmögliche Öffnungszeitraum des Verschlusses (9) ist. Die zum Durchführen des Verfahrens geeignete Aufnahmeanordnung umfaßt einen auftreffendes Licht aufintegrierenden elektronischen Detektor (5), einen mechanischen Zentralverschluß (9) und eine Steuereinheit (6) zum elektronischen Ansteuern des Detektors (5) und des Zentralverschlusses (9), wobei die Steuereinheit (6) eine Zeitsteuerung (10) aufweist, die den Detektor (5) zu einem vorbestimmten Zeitpunkt (t2) innerhalb des Öffnungszeitraums des Zentralverschlusses (9) zurücksetzt.

## Beschreibung

Die Erfindung betrifft ein Verfahren zur Luftbildaufnahme eines überflogenen Oberflächenbereichs mittels eines auftreffendes Licht aufintegrierenden elektronischen Detektors, der während eines Öffnungszeitraums eines elektronisch angesteuerten mechanischen Zentralverschlusses ein Bild elektronisch aufnimmt, sowie eine zur Durchführung dieses Verfahrens geeignete Anordnung, umfassend einen auftreffendes Licht aufintegrierenden elektronischen Detektor, einen mechanischen Zentralverschluß und eine Steuereinheit zum elektronischen Ansteuern des Detektors und des Zentralverschlusses.

Für die Aufnahme von Luftbildern werden neben den klassischen Reihenmeßkammern für Luftbildfilme auch kommerzielle digitale Kameras verwendet. Aber nur Objekte mit einem Iris-Zentralverschluß in der Pupille des Objektives erlauben eine Aufnahme der Szene mit konstanter Geometrie, wie sie für die photogrammetrische Auswertung erforderlich ist. Der Nachteil dieses Verfahrens ist die lange Zeitdauer für das Öffnen und Schließen des Verschlusses. Die kürzesten mit Zentralverschlüssen erreichbaren Belichtungszeiten liegen in der Größenordnung von 1/250stel Sekunde. Kommerzielle Kameras im Kleinbild oder Mittelformat erreichen zwar noch kürzere Belichtungszeiten bis herab zu einer 8000stel Sekunde. Dies gelingt jedoch nur durch die Verwendung eines Schlitzverschlusses. Durch die Überlagerung der Verschlußbewegung und der Flugbewegung über Grund kommt es zu einer Verzerrung der Bildgeometrie entlang der Flugrichtung.

Die photogrammetrisch präzise Auswertung erfordert für derartige Aufnahmen einen Zentralverschluß, damit die Bild-Geometrie nicht verzerrt wird. Bisher hat man sehr feinkörnige Filme eingesetzt, um die notwendige Auflösung zu erreichen. Leider sind derartige Filme sehr unempfindlich. Bei der Aufnahme von Bildern aus der Luft kommt es durch die Flugbewegung zu einer Verschmierung des Bildes bei den erforderlichen langen Belichtungszeiten. Man ist deshalb zur Bildwanderungskompensation (engl. Forward Motion Compensation (FMC)) übergegangen, d.h., der Film wird während der Aufnahme zur Kompensation der Flugbewegung bewegt. Dieses Verfahren setzt voraus, daß die Bildwanderung während der Belichtung über das Bildfeld konstant ist. Dies ist nur der Fall, wenn Bildebene und Szene parallel zueinander ausgerichtet sind. Verwendet man FMC, so fallen durch diese Gleichförmigkeitsforderung alle Kamerakonzepte mit Objektiven seitlicher Blickrichtung weg, bei denen die Bildwanderung über das Bildfeld stark variiert. Derartige Kameraanordnungen sind insbesondere auch für die Luftbildaufnahmen mit großem seitlichem (quer zur Flugrichtung) Sehfeld, wie etwa für die Aufklärung, insbesondere im Tiefflugbereich, üblich.

Es ist daher die Aufgabe der Erfindung, ein Aufnahmeverfahren der eingangs genannten Art derart weiterzubilden, daß auch ohne FMC Bilder mit gleich hoher Auflösung aufgenommen werden können, sowie eine entsprechende Aufnahmeanordnung bereitzustellen.

Diese Aufgabe wird erfindungsgemäß bei dem eingangs genannten Aufnahmeverfahren dadurch gelöst, daß zu einem vorbestimmten Zeitpunkt vor dem Ende des Schließvorgangs des Zentralverschlusses die im Detektor bis dahin aufintegrierte Bildinformation elektronisch gelöscht wird und nur die anschließend bis zum Ende des Schließvorgangs aufgenommene Bildinformation im Detektor aufintegriert wird, wobei die Belichtungsdauer des Detektors ab dem vorbestimmten Zeitpunkt bis zum Ende des Schließvorgangs kleiner als der kürzestmögliche Öffnungszeitraum des Verschlusses ist.

Der mit der Erfindung erzielte Vorteil besteht darin, daß bei digitalen Kameras mit verschlußgesteuerten Detektoren die Belichtungszeit des aufgenommenen Bildes kürzer als der Öffnungszeitraum des mechanischen Verschlusses ist. Das erfindungsgemäße Verfahren beruht auf der zeitlich verzahnten Ansteuerung des Verschlusses und des Zurücksetzens (Reset) des Detektors. Da Verschluß und Detektor digital gesteuert werden, ist es so möglich, den Zeitpunkt und die Belichtungsdauer mit einer Genauigkeit von 0,1 ms herab bis zu 0,1 ms festzulegen. Insbesondere können so sehr kurze Belichtungszeiten reproduzierbar und genau mit Zentralverschlüssen erreicht werden.

Das erfindungsgemäße Verfahren erlaubt es, lichtstarke Objektive mit großer Öffnung einzusetzen, da durch den gegenüber dem Öffnen des Verschlusses verzögerten Start der Belichtung kurze Belichtungszeiten erreicht werden können. Dadurch steht die benötigte Lichtmenge zur Verfügung, die wiederum erst sehr kurze Belichtungszeiten ermöglicht. Auf diese Weise ist es möglich, digitale Kameras ohne FMC einzusetzen und damit den genannten Einschränkungen zu entgehen. In der Photogrammetrie sind damit Aufnahmen mit präziser Geometrie auch ohne FMC möglich. Die kurze Belichtungszeit ermöglicht es darüber hinaus, auch weitere Störfaktoren wie ein Rollen oder Drehen des Flugzeugs in ihrer Auswirkung zu reduzieren. So ist es auch möglich, ohne die sonst erforderliche stabilisierte Plattform auszukommen. Weiter können auch Veränderungen in der Geometrie durch Lateralverschiebungen des Flugzeugs in der Luft (Turbulenzen, Luftlöcher, Seitenwindstöße) in ihren Auswirkungen reduziert werden. Diese Effekte konnten bisher auch durch stabilisierte Plattformen nicht eliminiert werden.

Für die Luftaufklärung ist es besonders wichtig, das Sehfeld zur Seite so groß wie möglich (am besten von Horizont zu Horizont) zu haben. Hier hat man bisher näherungsweise mit Kameras mit mehreren Objektiven gearbeitet, die ein gemeinsames FMC hatten. Die Veränderung der Bildwanderung in den Seitenobjektiven wurde dabei in Kauf genommen. Das erfindungsgemäße Verfahren mit kurzer Belichtungszeit vermeidet die FMC-Einschränkung und erlaubt größere Lichtstärken und damit trotz kurzer Belichtungszeit gute Empfindlichkeit. Bei einer etwas größeren Flughöhe (kleinere Bildwanderung) ist auch die Aufnahme dunklerer Szenen möglich.

Das erfindungsgemäße Aufnahmeverfahren ermöglicht ferner die Verwendung von solchen digitalen Kameras, die keine eigene elektronische Verschlußfunktion im Detektor aufweisen, auch für Luftbildaufnahmen.

Bei besonders bevorzugten Ausführungsformen der Erfindung ist die Belichtungsdauer des Detektors ab dem vorbestimmten Zeitpunkt bis zum Ende des Schließvorgangs kleiner als etwa 4 ms, vorzugsweise in Schritten herab bis etwa 0,1 ms.

Für die photogrammetrische Auswertung müssen sowohl der Belichtungsmittenzeitpunkt und die genaue Position des Detektors während der Aufnahme absolut bekannt sein. Hierfür dient bei klassischen Reihenmeßkammern der sogenannte Mittenkontakt, der bei der Mitte der Belichtungszeit ausgelöst wird. Erfindungsgemäß wird der vorbestimmte Zeitpunkt zu einer absoluten Zeit synchronisiert. Dazu kann beispielsweise zu einem festgelegten Zeitpunkt innerhalb der Belichtungszeit des Detektors, insbesondere zum Belichtungsmittenzeitpunkt, die absolute Zeit gemessen werden. Erfindungsgemäß wird zu einem festgelegten Zeitpunkt innerhalb der Belichtungszeit des Detektors, insbesondere zum Belichtungsmittenzeitpunkt, auch die absolute Position des Detektors im Raum gemessen.

Die oben genannte Aufgabe wird bei einer Anordnung der eingangs genannten Art dadurch gelöst, daß die Steuereinheit eine Zeitsteuerung aufweist, die den Detektor zu einem vorbestimmten Zeitpunkt innerhalb des Öffnungszeitraums des Zentralverschlusses zurücksetzt. Mit dieser erfindungsgemäßen Anordnung ergeben sich die bereits oben bezüglich des Verfahrens geschilderten Vorteile.

Vorzugsweise wird als Detektor ein CCD-Detektor eingesetzt.

Bei bevorzugten Ausführungsformen der Erfindung ist mit der Steuereinheit ein Sensor verbunden, der das Ende des Öffnungsvorgang des Verschlusses erfaßt. Der Sensor kann z.B. ein Wischkontakt oder eine Lichtschranke sein. In der Steuereinheit werden aus dem Offensignal des Sensors die jeweiligen Steuerimpulse für das Reset des Detektors, das Schließen des Verschlusses und die Abgabe eines Belichtungsmittenimpulses erzeugt.

Die Steuereinheit ist vorzugsweise mit einem Flug-Management-System verbunden, an das insbesondere der Belichtungsmittenimpuls weitergeleitet und dort zur Buchführung über die gemachten Aufnahmen verwendet wird. Um den Belichtungsmittenimpuls bei Anlagen zur absoluten Geo-Referenzierung auch zur Messung der aktuellen Lage der Kamera im Raum verwenden zu können, kann die Steuereinheit mit einer inertialen Meßplattform verbunden werden. Die Steuereinheit ist weiterhin auch mit einem GPS(Global Positioning System)-Empfänger verbunden, um die festgestellte GPS-Zeit des Belichtungsmittenimpulses zusammen mit den Bilddaten abspeichern zu können.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigte und beschriebene Ausführungsformen ist nicht als abschließende Aufzählung zu verstehen, sondern hat vielmehr beispielhaften Charakter für die Schilderung der Erfindung.

Es zeigt:
- Fig. 1: schematisch ein Ausführungsbeispiel einer erfindungsgemäßen Aufnahmeanordnung zur Kurzzeitbelichtung; und
- Fig. 2: den zeitlichen Verlauf der Lichtintensität des Detektors während des Öffnungszeitraums des Verschlusses bei der Aufnahmeanordnung der Fig. 1.

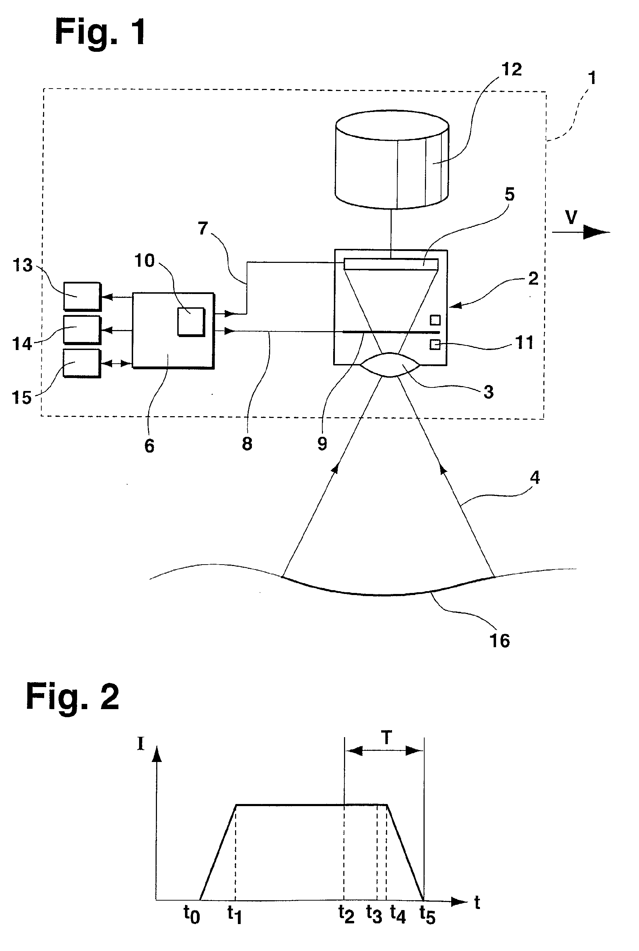

Die in **Fig. 1** insgesamt mit **1** bezeichnete Anordnung für Luftbildaufnahmen umfaßt eine digitale Kamera **2** mit einem Objektiv **3**, welches das einfallende Licht **4** auf einen digitalen CCD-Detektor **5** abbildet. Der Detektor **5** wird von einer Steuereinheit **6** über eine erste Steuerleitung **7** elektronisch gesteuert. Die Steuereinheit 6 steuert über eine zweite Steuerleitung **8** auch einen zwischen Objektiv 3 und Detektor 5 angeordneten elektromechanischen Zentralverschluß **9** an, der den Lichteinfall auf den Detektor 5 freigibt oder verschließt. Die Steuereinheit 6 umfaßt eine Zeitsteuerung **10**, um zu einem vorbestimmten Zeitpunkten Steuersignale zu erzeugen. Die Steuereinheit 6 ist mit einem z.B. als Lichtschranke oder Wischkontakt ausgebildeten Sensor 11 verbunden, der, wenn der Zentralverschluß vollständig offen ist, ein Offensignal abgibt. Die im Detektor aufintegrierte Bildinformation wird in einem Datenspeicher **12** gespeichert. Die Steuereinheit 6 ist außerdem mit einem Flug-Management-System (FMS) **13**, optional einer inertialen Meßplattform (IMU) **14** und einem GPS(Global Positioning System)- Empfänger **15** verbunden.

Die Anordnung 1 ist in einem Flugzeug (Geschwindigkeit **v**) installiert, um von dem überflogenen Oberflächenbereich **16** Luftbilder aufzunehmen.

In **Fig. 2** ist der zeitliche Verlauf der auf den Detektor 5 auftreffenden Lichtintensität I während des Öffnungszeitraums des Zentralverschlusses 9 aufgetragen. Über einen elektronischen Steuerimpuls der Steuereinheit 6 wird zum Zeitpunkt **t0** der Zentralverschluß 9 geöffnet, und die Bilddaten des überflogenen Oberflächenbereichs 12 werden im Detektor 5 aufintegriert. In der Regel vergehen mehrere ms, bis sich der Zentralverschluß 9 zu öffnen beginnt, da das hierzu notwendige Magnetfeld aufgebaut und die Verschlußlamellen beschleunigt werden müssen.

Zum Zeitpunkt **t1** sei der Zentralverschluß 9 vollständig geöffnet. In der Steuereinheit 6 werden mit Hilfe der Zeitsteuerung 10 Steuerimpulse für ein Reset des Detektors 5 und das Schließen des Zentralverschluß 9 festgelegt.

Zum festgelegten Zeitpunkt wird über den entsprechenden Steuerimpuls der Steuereinheit 6 der Zentralverschluß 9 wieder geschlossen. Auch der Schließvorgang nimmt einige Zeit . in Anspruch, da das Magnetfeld abgebaut bzw. umgepolt und die Verschlußlamellen beschleunigt werden müssen. Solange die gesamte Pupille noch frei ist, ändert sich nichts am Lichtfluß durch das Objektiv 3. Der echte Beginn des Schließvorganges des Zentralverschlusses 9 ist erreicht, wenn die Verschlußlamellen zum Zeitpunkt **t4** den Lichtstrom durch das Objektiv 3 zu beschneiden beginnen. Zum Zeitpunkt **t5** ist der Zentralverschluß 9 vollständig geschlossen.

Zum festgelegten Zeitpunkt **t2** innerhalb des Öffnungszeitraums des Zentralverschlusses 9, z.B. 0,1 ms vor dem Beginn des Schließvorgangs zum Zeitpunkt t4, werden über den entsprechenden Reset-Steuerimpuls der Steuereinheit 6 die im Detektor 5 bis dahin aufintegrierten Bildinformationen gelöscht. Dadurch werden mit dem Detektor 5 nur noch die ab dem vorbestimmten Zeitpunkt t2 bis zum Zeitpunkt t5 aufgenommenen Bilddaten, also mit einer Belichtungsdauer **T** = t5 - t2, aufintegriert. Da der Zentralverschluß 9 und das Reset des Detektors 5 elektronisch gesteuert werden, ist es möglich, den Anfangszeitpunkt und die Dauer der Belichtung mittels der Zeitsteuerung 10 so zeitgenau festzulegen, daß die Belichtungszeit T kleiner als der kürzestmögliche Öffnungszeitraum des Zentralverschlusses 9 ist. So können auch mit Zentralverschlüssen sehr kurze Belichtungszeiten reproduzierbar und genau erreicht werden.

Von einem als Wischkontakt ausgebildeten Sensor 11 wird beim Öffnen des Zentralverschlusses 9 ein Puls abgegeben. Über ein programmierbares Verzögerungsglied kann daraus die notwendige Zeitverzögerung herbeigeführt werden, die dem Belichtungsmittenzeitpunkt entspricht. Diese Verzögerungszeit ist in Abhängigkeit der Belichtungsdauer zusammen mit den anderen Zeiten in der Zeitsteuerung 10 programmiert. Für Zentralverschlüsse, bei denen der Sensor 11 als Lichtschranke ausgebildet ist, gibt es ein anderes Verfahren. Man verwendet in diesem Fall die fallende Flanke des Lichtschrankensignals als Steuersignal, welches das Verzögerungsglied auslöst. Je nach eingestellter Belichtungsdauer und entsprechend den Merkmalen des Verschlusses wird die digital programmierte Zeit abgerufen, die dem Belichtungsmittenzeitpunkt entspricht.

Zu einem festgelegten Zeitpunkt **t3** innerhalb der Belichtungszeit T, im vorliegenden Fall zum Belichtungsmittenzeitpunkt, werden die absolute Position des Detektors 5 im Raum und die absolute Zeit gemessen. Dazu wird zum festgelegten Zeitpunkt t3 ein entsprechenden Steuerimpuls der Steuereinheit 6 an das FMS 13, (ggf.) die IMU 14 und den GPS-Empfänger 15 weitergeleitet. Im FMS 13 wird der Belichtungsmittenzeitpunkt zur Buchführung über die gemachten Aufnahmen verwendet, während in der IMU 14 die absolute Lage des Detektors 5 bzw. der Kamera im Raum ermittelt wird. Im GPS-Empfänger 15 löst der Steuerimpuls eine Abfrage der absoluten GPS-Zeit aus. Die festgestellte GPS-Zeit wird danach an das FMS 13 und einen Kameracomputer (nicht gezeigt) weitergeleitet und zusammen mit den Bilddaten im Datenspeicher 12 abgespeichert. Durch die gespeicherte absolute GPS-Zeit kann danach durch Auswertung der Satellitensignale die absolute Position der Kamera 2 im Raum bestimmt verwendet werden. Ist eine IMU vorhanden, so können aus deren Meßwerten über die absolute Lage(orientierung) der Kamera im Raum auch die Richtung der optischen Achse der Kamera und so die Lage des Sehfeldes in absoluten Koordinaten am Boden bestimmt werden.

## Patentansprüche

1. Verfahren zur Luftbildaufnahme eines überflogenen Oberflächenbereichs (16) mittels eines auftreffendes Licht aufintegrierenden elektronischen Detektors (5), der während eines Öffnungszeitraums eines elektronisch angesteuerten mechanischen Zentralverschlusses (9) ein Bild elektronisch aufnimmt,
**dadurch gekennzeichnet,**
**daß** zu einem vorbestimmten Zeitpunkt (t2) vor dem Ende des Schließvorgangs des Zentralverschlusses (9) die im Detektor (5) bis dahin aufintegrierte Bildinformation elektronisch gelöscht wird und nur die anschließend bis zum Ende des Schließvorgangs aufgenommene Bildinformation im Detektor (5) aufintegriert wird, wobei die Belichtungsdauer (T) des Detektors (5) ab dem vorbestimmten Zeitpunkt (t2) bis zum Ende des Schließvorgangs kleiner als der kürzestmögliche Öffnungszeitraum des Verschlusses (9) ist.

2. Verfahren nach Anspruch 1, **dadurch gekennzeichnet, daß** die Belichtungsdauer (T) des Detektors (5) ab dem vorbestimmten Zeitpunkt (t2) bis zum Ende des Schließvorgangs kleiner als etwa 4 ms, vorzugsweise bis herab zu etwa 0,1 ms ist.

3. Verfahren nach Anspruch 1 oder 2, **dadurch gekennzeichnet, daß** der vorbestimmte Zeitpunkt (t2) zu einer absoluten Zeit synchronisiert wird.

4. Verfahren nach Anspruch 3, **dadurch gekennzeichnet, daß** zu einem festgelegten Zeitpunkt (t3) innerhalb der Belichtungszeit (T) des Detektors (5), insbesondere zum Belichtungsmittenzeitpunkt, die absolute Zeit gemessen wird.

5. Verfahren nach einem der vorhergehenden Ansprüche, **dadurch gekennzeichnet, daß** zu einem festgelegten Zeitpunkt (t3) innerhalb der Belichtungszeit (T) des Detektors (5), insbesondere zum Belichtungsmittenzeitpunkt, die absolute Position des Detektors (5) im Raum gemessen wird.

6. Anordnung zum Durchführen des Verfahrens nach einem der vorhergehenden Ansprüche, umfassend einen auftreffendes Licht aufintegrierenden elektronischen Detektor (5), einen mechanischen Zentralverschluß (9) und eine Steuereinheit (6) zum elektronischen Ansteuern des Detektors (5) und des Zentralverschlusses (9),
**dadurch gekennzeichnet,**
**daß** die Steuereinheit (6) eine Zeitsteuerung (10) aufweist, die den Detektor (5) zu einem vorbestimmten Zeitpunkt (t2) innerhalb des Öffnungszeitraums des Zentralverschlusses (9) zurücksetzt.

7. Anordnung nach Anspruch 6, **dadurch gekennzeichnet, daß** der Detektor (5) ein CCD-Detektor ist.

8. Anordnung nach Anspruch 6 oder 7, **dadurch gekennzeichnet, daß** mit der Steuereinheit (6) ein Sensor (11) verbunden ist, der das Ende des Öffnungsvorgangs des Verschlusses (9) erfaßt.

9. Anordnung nach einem der Ansprüche 6 bis 8, **dadurch gekennzeichnet, daß** die Steuereinheit (6) mit einem Flug-Management-System (12) und/oder mit einer inertialen Meßplattform (13) und/oder mit einem GPS-Empfänger (14) verbunden ist.
